# EUROPEAN PATENT SPECIFICATION

(11) **EP 0 918 665 B1**
(45) Date of publication and mention of the grant of the patent: **31.05.2000**
(21) Application number: 96931584.5
(22) Date of filing: 26.08.1996
(51) Int. Cl.: B60R 21/20

(54) **INSTRUMENT PANEL PASSENGER SIDE AIR BAG DOOR**
ARMATURENBRETT-BEIFAHRERLUFTSACKDECKEL
PORTE A COUSSIN D'AIR DE TABLEAU DE BORD COTE PASSAGER

(43) Date of publication of application: 02.06.1999
(73) Proprietor: THE GOODYEAR TIRE & RUBBER COMPANY, Akron, Ohio 44316-0001 (US)
(72) Inventor: RUPP, Marlow, Wayne, Lancaster, OH 43130 (US)
(74) Representative: Blot, Philippe Robert Emile
(86) International application number: US9614763
(87) International publication number: WO9808714

(56) References cited:
- EP-A- 0 618 110
- WO-A-92/09458
- US-A- 5 066 037
- US-A- 5 308 111
- US-A- 5 394 602
- RESEARCH DISCLOSURE, no. 372, 1 April 1995, EMSWORTH, GB, page 271 XP000509080 "AIR BAG DOOR FOR VEHICLE INSTRUMENT PANEL"
- PATENT ABSTRACTS OF JAPAN vol. 018, no. 503 (M-1677), 21 September 1994 & JP 06 171448 A (TOYOTA MOTOR CORP), 21 June 1994,

## Description

### Technical Field

This invention pertains to the art of methods for manufacturing an air bag door assembly for use with a supplemental restraint system, and more specifically to methods for manufacturing a rigid door assembly having locking tabs to selectively seat the assembly in an opening in a vehicle trim panel.

### Background Art

Automotive vehicles have long utilized restraint systems for the safety of vehicle passengers. Initially, such restraint systems included seat belts which fit over the occupant's lap. Later many restraint systems were modified to add an additional strap, or shoulder harness, which crossed the occupant's chest and further protected them against impacts. Of late, air bag supplemental restraint systems have become increasingly popular. A typical air bag supplemental restraint system includes an inflatable bag which is stored in a deflated condition within the vehicle steering wheel or trim panel. Upon a relatively severe impact, the air bag is rapidly inflated and deployed into the passenger compartment through various means and openings.

One way of deploying an inflating air bag into the passenger compartment involves the displacement of an air bag door assembly which is seated in an opening in the trim panel.

In the art, various designs for door assemblies have been proposed. U.S. Patent No. 5,308,111 discloses an air bag system including a hinged cover door. The cover door is thicker around its perimeter due to the presence of a flange. However, because of placement of air bag assemblies in vehicle trim panels at locations where they are subjected to high temperatures (240 degrees Fahrenheit), the door assembly may warp and unseat from the vehicle trim panel. The present invention is directed to a air bag door assembly which is strengthened against warping and is prevented from inappropriately unseating from the vehicle trim panel by use of one or more flange extensions that function as locking tabs.

### Disclosure of Invention

In accordance with the practice of the present invention there is provided an air bag door assembly and method for producing the same for use in a vehicle equipped with an air bag supplemental restraint system.

More particularly, in accordance with the present invention, an air bag door assembly comprises a layered construction wherein foam material is disposed between an underlying substrate and an overlying skin. The door assembly further comprises an inwardly directed flange arranged about the perimeter of the underlying substrate. During the manufacturing process, the flange serves as a foam shut-off to eliminate foam flash from the undersurface of the door assembly after the foam cure cycle. Additionally, during the trimming process, the flange provides a rigid surface against which a hot knife can cut. The flange also serves to impart rigidity to the door assembly to prevent warping and unseating.

In accordance with the present invention as defined by claim 1 the door assembly is characterized by means for strengthening which is disposed about a perimeter of the underlying substrate.

In accordance with the invention, the strengthening means comprises an inwardly directed flange extending a predetermined minimum length from an undersurface of the underlying substrate.

In accordance with the invention, the flange includes at least one flange extension having a stem of predetermined width. The stem is internally deflectable toward the undersurface of the substrate from a first vertical position to a second engaging position. The second engaging position is associated with an engaging angle a.

According to another aspect of the invention, the flange extension further includes a head portion which comprises an engaging surface. The engaging surface selectively contacts the vehicle trim panel near a periphery of the opening therein.

According to another aspect of the invention, a method of producing an air bag door assembly is defined by claim 8.

According to another aspect of the inventive method, the foam material is prevented from contacting an undersurface of the underlying substrate. The flange directs placement of the foam material during the step of introducing the foam material between the overlying skin and the underlying substrate.

According to another aspect of the inventive method, the foam material is also introduced on the external surface of the flange. During the trimming step, the knife is positioned so that a portion of the foam material on the external surface of the flange is removed.

According to another aspect of the inventive method, a flange extension is formed at a first location by extending the flange length, the flange extension comprises a stem having a predetermined width.

According to another aspect of the inventive method, a head portion is formed on a distal end of the stem, the head portion comprising an engaging surface.

According to another aspect of the invention, a method of displacing an air bag door assembly from an engaged position is defined by claim 17.

One advantage to the present invention is the enhanced rigidity of the door assembly provided by the flange around the perimeter of the substrate. The increased rigidity lessens the likelihood of thermal distortion due to solar radiation.

Another advantage of the present invention is the prevention of foam flash from forming on the undersurface of the substrate.

Another advantage of the present invention is the provision of a rigid surface against which a hot knife can trim the cured assembly.

Another advantage of the present invention is the way in which the door assembly is maintained in the opening of the vehicle trim panel until deployment of an air bag.

Still other benefits and advantages of the invention will become apparent to those skilled in the art to which it pertains upon a reading and understanding of the following detailed specification.

### Brief Description of Drawings

The invention may take physical form in certain parts and arrangement of parts, a preferred embodiment of which will be described in detail in this specification and illustrated in the accompanying drawings which form a part hereof and wherein:
Figure 1 is an exploded view of a vehicle trim panel and an associated air bag door assembly according to the invention.
Figure 2 is a sectional view of the door assembly taken along 2-2 of Figure 1.
Figure 3 is a side sectional view of a door assembly being seated in the opening of the trim panel.

### Detailed Description of the Invention

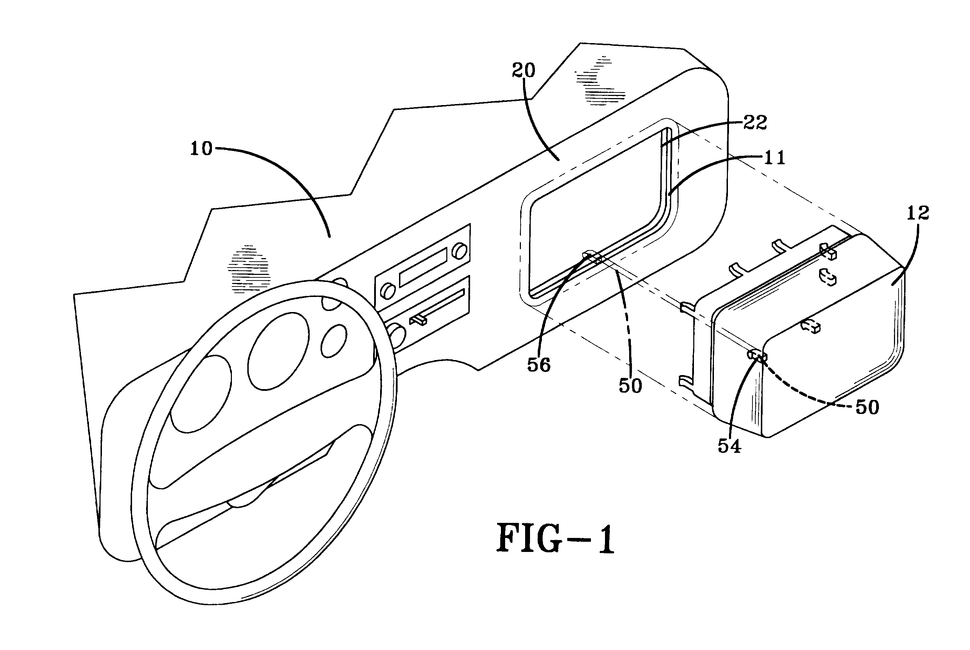

Referring now to the drawings wherein the showings are for purposes of illustrating a preferred embodiment of the invention only and not for purposes of limiting the same, Figure 1 shows a vehicular trim panel 10 having an opening 11 therein through which a supplemental restraint system air bag (not shown) may be deployed upon rapid deceleration of the vehicle such as occurs in a vehicle collision. An associated air bag door assembly 12 is adapted to be seated in the opening 11 in the trim panel 10.

As shown in Figure 2, the door assembly 12 comprises a layered construction including an outer skin 13, foam material 14, and an underlying substrate 16. In addition, the door assembly may include a layer of plastic cladding 17. In accordance with the present invention, the skin 13 of the door assembly 12 comprises polyvinyl chloride or other material corresponding to the outer surface 20 of trim panel 10 to minimize the presence of the door assembly 12 as viewed by a passenger in the vehicle.

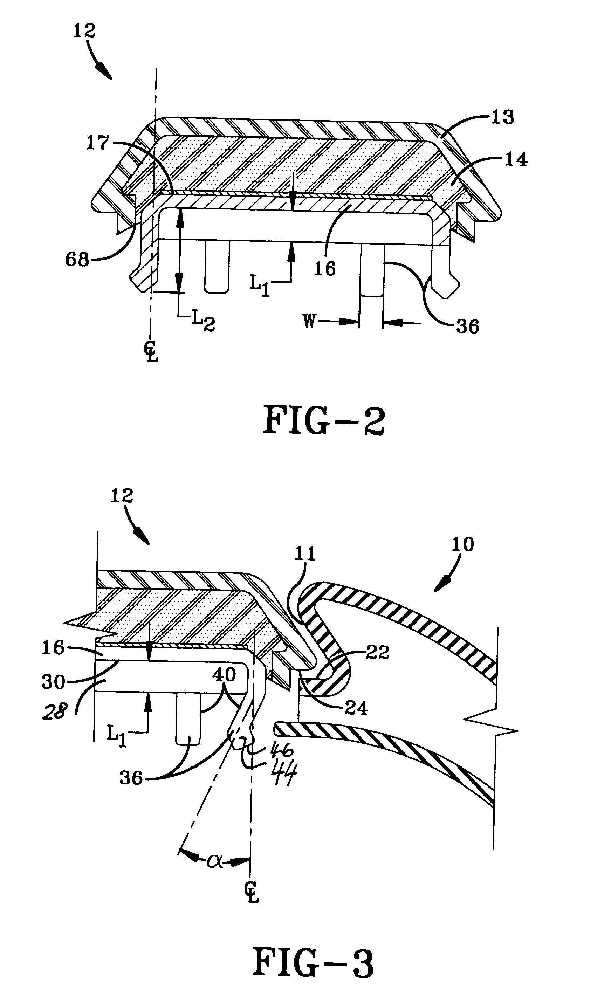

With reference to Figure 3, the trim panel 10 includes a seat 22 around the periphery of opening 11. The door assembly 12 includes a mating seating surface 24 which contacts seat 22 when the door assembly 12 is seated in the opening 11.

The underlying substrate 16 includes an inwardly directed flange 28 extending a minimum length L₁ from undersurface 30 along the entire perimeter thereof. "Inwardly" meaning in a direction away from the passenger compartment when the door assembly is seated in opening 11. The flange 28 is generally vertical to the undersurface 30 of substrate 16. In a preferred embodiment, the flange length L₁ is between 6 mm to 25 mm with a preferred length of 12 mm.

At a plurality of locations around the substrate perimeter, the flange 28 is lengthened and reshaped to form flange extensions 36. Each of the flange extensions 36 includes a deflectable stem 40 and a wedged shaped head portion 44 having a sloped engaging surface 46. When the door assembly 12 is installed into a seat 22 around the periphery of the opening 11 in trim panel 10, the stem 40 of each flange extension 36 is internally deflected toward the undersurface 30 of substrate 16. "Internally" referring to movement from a vertical position toward the undersurface 30. The mating surface 24 of the door assembly 12 rests against the seat 22 around the periphery of the opening 11. In an engaged position, the stem 40 remains partially deflected from the vertical as shown by engaging angle a and the sloped engaging surface 46 contacts the vehicle trim panel 10 near a periphery of the opening 11 therein. The flange extensions 36 thus function as locking tabs to retain the door assembly 12 in an engaged position. The angle a ranges between 5 degrees and 60 degrees with a preferred embodiment having an angle a equal to about 30 degrees.

With reference again to Figure 2, the flange extensions 36 may have a width W of from 15 mm to 40 mm and an overall length L₂ of from 15 mm to 50 mm with a preferred length of 30 mm. In a preferred embodiment of the invention, the door assembly 12 may have as many as five flange extensions 36. The number and positioning of flange extensions 36 is based on overall size and geometry considerations. By adjusting the characteristics of the flange extensions 36, the amount of force required against the undersurface 30 of the substrate 16 to disengage the head portions 44 can be varied. Choice of the substrate material, flange extension design, and number of flange extensions 36 enables broad application of the present invention.

The invention may be practiced with a door assembly 12 anchored to the trim panel 10 by tether 50. Generally, the tether 50 operates to direct the movement of the door assembly 12 during deployment of the air bag to prevent the door assembly 12 from disengaging completely from the trim panel 10. Tether 50 is attached at one end 54 to undersurface 30 and at the other end 56 to trim panel 10.

A preferred method for manufacturing a door assembly 12 in accordance with the invention will now be described.

An underlying substrate 16 is shaped for use in a door assembly 12. During the shaping process, an inwardly directed flange 28 is formed around the entire perimeter of the substrate 16. The flange 28 has a minimum length L₁ and serves to strengthen the ensuing door assembly 12.

The overlying skin 13 and the underlying substrate 16 are positioned for the introduction of foam material 14 therebetween such as in a mold. In a preferred method, uncured foam material 14 is introduced into a central cavity of a closed mold. During the curing process, the foam material 14 reacts and expands to fill the space between the overlying skin 13 and the underlying substrate 16.

The cured door assembly 12 is then trimmed with a hot knife (not shown). In the preferred method, the flange 28 provides a rigid external surface 62 for the hot knife to press against during the trimming process.

The presence of the flange 28 prevents the foam material 14 from contacting the undersurface 30 of the underlying substrate 16 by directing placement of the foam material 14 as it is introduced into the mold. Any foam flash is directed to the external surface 62 of flange 28 and during the trimming process, the knife can be positioned to remove unwanted foam material 14 from the external surface 62 of the flange 28. The hot knife generates trimmed surface 68 which abuts the external surface 62 of flange 28. As shown in Figure 2, the door assembly 12 comprises a controlled cross-sectional profile.

As flange 28 is being formed around the perimeter of the substrate 16, flange extensions 36 may be formed at a plurality of locations by locally extending the flange length. Each of the flange extensions 36 comprise a stem 40 having a predetermined width W. In the preferred method, a head portion 44 is formed on the distal end 70 of each stem 40. Each head portion 44 includes a sloped engaging surface 46.

The preferred embodiments and methods have been described hereinabove. It will be apparent to those skilled in the art that the above methods may incorporate changes and modifications without departing from the scope of this invention. It is intended to include all such modifications and alterations in so far as they come within the scope of the appended claims.

## Claims

1. A door assembly (12) for use with a supplemental restraint air bag system wherein an inflating air bag enters a passenger compartment of a vehicle through an opening (11) in a vehicle trim panel (10) in response to rapid deceleration of said vehicle by displacing said door assembly, said door assembly comprising a layer of foam material (14) disposed between an overlying skin (13) and an underlying substrate (16), said underlying substrate including an inwardly directed flange (28) extending a predetermined minimum length from an undersurface of underlying substrate about a perimeter thereof, said door assembly being characterized by:
said flange having at least one flange extension (36) comprising a stem (40) having a predetermined width, said stem being internally deflectable from a first vertical position to a second engaging position, said second engaging position being associated with an engaging angle α.

2. The door assembly of claim 1 wherein said flange extension further comprises a head portion (44) located at a distal end of said stem, said head portion comprising an engaging surface (46).

3. The door assembly of claim 2 wherein said engaging surface selectively contacts said vehicle trim panel near a periphery of said opening.

4. The door assembly of claim 1 wherein said minimum flange length is between 6 mm and 25 mm.

5. The door assembly of claim 1 wherein α measures between 5 degrees and 60 degrees.

6. The door assembly of claim 1 wherein said predetermined width is between 15 mm and 40 mm.

7. A method of producing an air bag door assembly (12) for use with a supplemental restraint air bag system wherein an inflating air bag enters a passenger compartment of a vehicle through an opening in a vehicle trim panel (10) in response to rapid deceleration of said vehicle by displacing said door assembly, said door assembly comprising a layer of foam material (14) disposed between an overlying skin (13) and an underlying substrate (16), the method including the step of forming an inwardly directed flange (28) around a perimeter of said underlying substrate, said flange having a minimum length, the method being characterized by the steps of:
introducing said foam material between said overlying skin and said underlying substrate; and,
trimming said foam material and said overlying skin with a hot knife, said not knife contacting an external surface (62) of said flange.

8. The method of claim 7 further comprising the step of:
preventing said foam material from contacting an undersurface (30) of said underlying substrate.

9. The method of claim 8 wherein said step of preventing said foam material from contacting said undersurface of said underlying substrate comprises:
utilizing said flange to direct placement of said foam material during said step of introducing said foam material between said overlying skin and said underlying substrate.

10. The method of claim 7 further comprising the step of:
introducing said foam material on said external surface of said flange.

11. The method of claim 10 wherein said step of trimming said overlying skin and said foam material comprises:
positioning said knife so that a portion of said foam material on said external surface of said flange is removed.

12. The method of claim 7 further comprising the step of:
forming a flange extension (36) at a first location by extending said flange length, said flange extension comprising a stem having a predetermined width.

13. The method of claim 12 further comprising the step of:
forming a head portion (44) on a distal end of said stem, said head portion comprising an engaging surface (46).

14. The method of claim 7 further comprising the step of:
forming a plurality of spaced flange extensions (36) by extending said flange length in a plurality of locations, each of said flange extensions comprising a stem (40) having a predetermined width.

15. The method of claim 14 further comprising the step of:
forming a head portion (44) on a distal end of each of said stems, each of said head portions having an engaging surface (46).

16. A method of displacing an air bag door assembly (12) from an engaged position in a vehicle equipped with a stored air bag to allow said air bag to enter a passenger compartment of said vehicle through an opening (11) in a vehicle trim panel in response to rapid deceleration of said vehicle, said door assembly comprising a layer of foam material (14) disposed between an overlying skin (13) and an underlying substrate (16) having an inwardly directed flange (28) about a perimeter thereof, said flange having a minimum flange length, said air bag pressing against an undersurface (30) of said substrate upon inflation thereof, the method being characterized by the steps of:
forming a vertical flange extension (36) at a first location by extending said flange length, said flange extension comprising a stem (40) having a predetermined width and a head portion (44), said head portion having an engaging surface (46);
positioning said door assembly in said engaged position relative lo said vehicle trim panel so that said stem has an internal displacement associated with an engaging angle a, and said engaging surface of said head portion contacts said vehicle trim panel near a periphery of said opening; and,
increasing said internal displacement of said stem in response to said air bag inflation to remove said engaging surface from contact with said vehicle trim panel.

## Patentansprüche

1. Deckelgruppe (12) zur Verwendung mit einem zusätzlichen Rückhalteairbagsystem, wobei ein sich aufblasender Airbag in einen Beifahrerraum eines Fahrzeugs durch eine Öffnung (11) in einem Fahrzeugarmaturenbrett (10) als Reaktion auf eine starke Verzögerung des Fahrzeugs durch Verschiebung der Deckelgruppe eintritt, wobei die Deckelgruppe eine Schicht Schaummaterial (14) umfaßt, die zwischen einer darüber liegenden Haut (13) und einem darunter liegenden Substrat (16) angeordnet ist, wobei das darunter liegende Substrat einen nach innen gerichteten Flansch (28) umfaßt, der sich um eine vorherbestimmte Mindestlänge von einer unteren Oberfläche des darunter liegenden Substrates um einen Umfang derselben erstreckt, wobei die Deckelgruppe dadurch gekennzeichnet ist, daß:
der Flansch mindestens eine Flanschverlängerung (36) aufweist, die einen Schaft (40) mit einer vorherbestimmten Breite umfaßt, wobei der Schaft intern von einer ersten vertikalen Position zu einer zweiten Eingriffsposition ablenkbar ist, wobei die zweite Eingriffsposition einem Eingriffswinkel a zugeordnet ist.

2. Deckelgruppe nach Anspruch 1, wobei die Flanschverlängerung weiterhin einen Kopfabschnitt (44) umfaßt, der sich an einem distalen Ende des Schaftes befindet, wobei der Kopfabschnitt eine Eingriffsfläche (46) umfaßt.

3. Deckelgruppe nach Anspruch 2, wobei die Eingriffsfläche selektiv das Fahrzeugarmaturenbrett in der Nähe eines Umfangs der Öffnung berührt.

4. Deckelgruppe nach Anspruch 1, wobei die Mindestflanschlänge zwischen 6 mm und 25 mm beträgt.

5. Deckelgruppe nach Anspruch 1, wobei der Winkel a zwischen 5 Grad und 60 Grad beträgt.

6. Deckelgruppe nach Anspruch 1, wobei die vorherbestimmte Breite zwischen 15 mm und 40 mm beträgt.

7. Verfahren zur Herstellung einer Deckelgruppe (12) zur Verwendung mit einem zusätzlichen Rückhalteairbagsystem, wobei ein sich aufblasender Airbag in einen Beifahrerraum eines Fahrzeugs durch eine Öffnung in einem Fahrzeugarmaturenbrett (10) als Reaktion auf eine starke Verzögerung des Fahrzeugs durch Verschiebung der Deckelgruppe eintritt, wobei die Deckelgruppe eine Schicht Schaummaterial (14) umfaßt, die zwischen einer darüber liegenden Haut (13) und einem darunter liegenden Substrat (16) angeordnet ist, wobei das Verfahren den Schritt der Bildung eines nach innen gerichteten Flansches (28) rund um einen Umfang des darunter liegenden Substrates umfaßt, wobei der Flansch eine Mindestlänge besitzt, wobei das Verfahren durch die folgenden Schritte gekennzeichnet ist:
das Einbringen des Schaummaterials zwischen die darüber liegende Haut und das darunter liegende Substrat; und
das Zuschneiden des Schaummaterials und der darüber liegenden Haut mit einem heißen Messer, wobei das heiße Messer eine äußere Oberfläche (62) des Flansches berührt.

8. Verfahren nach Anspruch 7, weiters umfassend den folgenden Schritt:
das Verhindern einer Berührung zwischen dem Schaummaterial und einer unteren Oberfläche (30) des darunter liegenden Substrates.

9. Verfahren nach Anspruch 8, wobei der Schritt des Verhinderns einer Berührung zwischen dem Schaummaterial und der unteren Oberfläche des darunter liegenden Substrates umfaßt:
das Verwenden des Flansches zur gerichteten Anordnung des Schaummaterials während des Schrittes der Einbringung des Schaummaterials zwischen der darüber liegenden Haut und des darunter liegenden Substrates.

10. Verfahren nach Anspruch 7, weiters umfassend den folgenden Schritt:
das Auftragen des Schaummaterials auf die äußere Oberfläche des Flansches.

11. Verfahren nach Anspruch 10, wobei der Schritt des Zuschneidens der darüber liegenden Haut und des Schaummaterials umfaßt:
das Anordnen des Messers auf eine Art und Weise, daß ein Abschnitt des Schaummaterials an der äußeren Oberfläche des Flansches entfernt wird.

12. Verfahren nach Anspruch 7, weiters umfassend den folgenden Schritt:
das Bilden einer Flanschverlängerung (36) an einer ersten Position durch Verlängerung der Flanschlänge, wobei die Flanschverlängerung einen Schaft mit einer vorherbestimmten Breite umfaßt.

13. Verfahren nach Anspruch 12, weiters umfassend den folgenden Schritt:
das Bilden eines Kopfabschnitts (44) an einem distalen Ende des Schaftes, wobei der Kopfabschnitt eine Eingriffsfläche (46) umfaßt.

14. Verfahren nach Anspruch 7, weiters umfassend den folgenden Schritt:
das Bilden einer Vielzahl an beabstandeten Flanschverlängerungen (36) durch Verlängerung der Flanschlänge an einer Vielzahl von Positionen, wobei jede Flanschverlängerung einen Schaft (40) mit einer vorherbestimmten Breite umfaßt.

15. Verfahren nach Anspruch 14, weiterhin umfassend den folgenden Schritt:
das Bilden eines Kopfabschnitts (44) an einem distalen Ende eines jeden Schaftes, wobei jeder Kopfabschnitt eine Eingriffsfläche (46) aufweist.

16. Verfahren zum Verschieben einer Airbagdeckelgruppe (12) von einer Eingriffsposition in einem Fahrzeug, das mit einem verstauten Airbag ausgestattet ist, um zu ermöglichen, daß der Airbag in den Beifahrerraum des Fahrzeugs durch eine Öffnung (11) in einem Fahrzeugarmaturenbrett als Reaktion auf eine starke Verzögerung des Fahrzeugs eintreten kann, wobei die Deckelgruppe eine Schicht Schaummaterial (14) umfaßt, die zwischen einer darüber liegenden Haut (13) und einem darunter liegenden Subtrat (16) mit einem nach innen gerichteten Flansch (28) rund um einen Umfang derselben angeordnet wird, wobei der Flansch eine Mindestflanschlänge besitzt, wobei der Airbag gegen eine untere Oberfläche (30) des Subtrates drückt, wenn dieser aufgeblasen wird, wobei das Verfahren durch die folgenden Schritte gekennzeichnet ist:
das Bilden einer vertikalen Flanschverlängerung (36) an einer ersten Position durch Verlängerung der Flanschlänge, wobei die Flanschverlängerung einen Schaft (40) mit einer vorherbestimmten Breite sowie einen Kopfabschnitt (44) umfaßt, wobei der Kopfabschnitt eine Eingriffsfläche (46) besitzt;
das Anordnen der Deckelgruppe in der Eingriffsposition relativ zum Fahrzeugarmaturenbrett, so daß der Schaft eine interne Verschiebung aufweist, die mit einem Eingriffswinkel a in Zusammenhang steht, und wobei die Eingriffsfläche des Kopfabschnitts das Fahrzeugarmaturenbrett in der Nähe eines Umfangs der Öffnung berührt; und
das Erhöhen der internen Verschiebung des Schaftes als Reaktion auf das Aufblasen des Airbags, um die Eingriffsfläche aus dem Kontakt mit dem Fahrzeugarmaturenbrett zu entfernen.

## Revendications

1. Ensemble de porte (12) destiné à être utilisé avec un système de coussin d'air ou airbag de retenue supplémentaire dans lequel un airbag qui se gonfle entre dans un compartiment passagers d'un véhicule par une ouverture (11) ménagée dans un panneau (10) de garnissage du véhicule en réponse à une décélération rapide dudit véhicule en déplaçant ledit ensemble de porte, ledit ensemble de porte comprenant une couche de mousse (14) disposée entre un revêtement de couverture (13) et un substrat sous-jacent (16), ledit substrat sous-jacent comportant un rebord (28) orienté vers l'intérieur qui s'étend sur une longueur minimale prédéterminée depuis une surface de dessous du substrat sous-jacent autour du périmètre de celui-ci, ledit ensemble de porte étant caractérisé en ce que :
ledit rebord comporte au moins un prolongement (36) de rebord comprenant une tige (40) qui a une largeur prédéterminée, ladite tige pouvant être fléchie vers l'intérieur depuis une première position verticale vers une deuxième position de contact, ladite deuxième position de contact étant associée à un angle de contact α.

2. L'ensemble de porte de la revendication 1, dans lequel ledit prolongement de rebord comprend de plus une partie de tête (44) située à une extrémité distale de ladite tige, ladite partie de tête comprenant une surface de contact (46).

3. L'ensemble de porte de la revendication 2, dans lequel ladite surface de contact vient en contact sélectivement avec ledit panneau de garnissage de véhicule au voisinage de la périphérie de ladite ouverture.

4. L'ensemble de porte de la revendication 1, dans lequel ladite longueur de rebord minimale est comprise entre 6 mm et 25 mm.

5. L'ensemble de porte de la revendication 1, dans lequel α mesure entre 5 degrés et 60 degrés.

6. L'ensemble de porte de la revendication 1, dans lequel ladite largeur prédéterminée est comprise entre 15 mm et 40 mm.

7. Procédé de réalisation d'un ensemble de porte (12) pour un coussin d'air ou airbag destiné à être utilisé avec un système d'airbag de retenue supplémentaire dans lequel un airbag qui se gonfle entre dans un compartiment passagers d'un véhicule par une ouverture ménagée dans un panneau (10) de garnissage du véhicule en réponse à une décélération rapide dudit véhicule en déplaçant ledit ensemble de porte, ledit ensemble de porte comprenant une couche de mousse (14) disposée entre un revêtement de couverture (13) et un substrat sous-jacent (16), le procédé comprenant l'étape de réalisation d'un rebord (28) orienté vers l'intérieur autour du périmètre dudit substrat sous-jacent, ledit rebord ayant une longueur minimale, le procédé étant caractérisé par les étapes consistant à:
- introduire ladite mousse entre ledit revêtement de couverture et ledit substrat sous-jacent ; et,
- parer ladite mousse et ledit revêtement de couverture à l'aide d'un couteau chaud, ledit couteau chaud étant en contact avec une surface extérieure (62) dudit rebord.

8. Le procédé de la revendication 7, comprenant de plus l'étape consistant à :
empêcher ladite mousse de venir en contact avec une surface de dessous (30) dudit substrat sous-jacent.

9. Le procédé de la revendication 8, dans lequel ladite étape consistant à empêcher ladite mousse de venir en contact avec ladite surface de dessous dudit substrat sous-jacent comprend :
- l'utilisation dudit rebord pour orienter le positionnement de ladite mousse pendant ladite étape d'introduction de ladite mousse entre ledit revêtement de couverture et ledit substrat sous-jacent.

10. Le procédé de la revendication 7 comprenant de plus l'étape consistant à :
introduire ladite mousse sur ladite surface extérieure dudit rebord.

11. Le procédé de la revendication 10, dans lequel ladite étape consistant à parer ledit revêtement de couverture et ladite mousse comprend :
le positionnement dudit couteau de sorte qu'une portion de ladite mousse sur ladite surface extérieure dudit rebord soit enlevée.

12. Le procédé de la revendication 7 comprenant de plus l'étape de :
réalisation d'un prolongement (36) de rebord à un premier emplacement en augmentant ladite longueur de rebord, ledit prolongement de rebord comprenant une tige qui a une largeur prédéterminée.

13. Le procédé de la revendication 12 comprenant de plus l'étape de :
réalisation d'une partie de tête (44) sur une extrémité distale de ladite tige, ladite partie de tête comprenant une surface de contact (46).

14. Le procédé de la revendication 7 comprenant de plus l'étape de :
réalisation d'une pluralité de prolongements de rebord (36) espacés les uns des autres en augmentant ladite longueur de rebord à plusieurs emplacements, chacun desdits prolongements de rebord comprenant une tige (40) qui a une largeur prédéterminée.

15. Le procédé de la revendication 14 comprenant de plus l'étape de :
réalisation d'une partie de tête (44) à une extrémité distale de chacune desdites tiges, chacune desdites parties de tête comportant une surface de contact (46).

16. Procédé de déplacement d'un ensemble de porte (12) pour un coussin d'air ou airbag depuis une position accouplée dans un véhicule muni d'un airbag rangé pour permettre audit airbag d'entrer dans un compartiment passagers dudit véhicule par une ouverture (11) ménagée dans un panneau de garnissage du véhicule en réponse à une décélération rapide dudit véhicule, ledit ensemble de porte comprenant une couche de mousse (14) disposée entre un revêtement de couverture (13) et un substrat sous-jacent (16) qui présente un rebord (28) orienté vers l'intérieur autour du périmètre de celui-ci, ledit rebord ayant une longueur de rebord minimale, ledit airbag exerçant une pression contre une surface de dessous (30) dudit substrat lors du gonflage de celui-ci, le procédé étant caractérisé par les étapes de :
- réalisation d'un prolongement de rebord vertical (36) à un premier emplacement en augmentant ladite longueur de rebord, ledit prolongement de rebord comprenant une tige (40) qui a une largeur prédéterminée et une partie de tête (44), ladite partie de tête comportant une surface de contact (46) ;
- positionnement dudit ensemble de porte dans ladite position accouplée ou de coopération par rapport audit panneau de garnissage de véhicule de sorte que ladite tige ait un déplacement ou course intérieure associée à un angle de contact a, et ladite surface de contact de ladite partie de tête vienne en contact avec ledit panneau de garnissage de véhicule au voisinage de la périphérie de ladite ouverture ; et,
- augmentation de ladite course intérieure de ladite tige en réponse audit gonflage de l'airbag pour mettre ladite surface de contact hors de contact avec ledit panneau de garnissage de véhicule.
